## Europäisches Patentamt
## European Patent Office
## Office européen des brevets

(19)

(11) Veröffentlichungsnummer : **0 352 401 B1**

(12) **EUROPÄISCHE PATENTSCHRIFT**

(45) Veröffentlichungstag der Patentschrift :
**29.04.92 Patentblatt 92/18**

(21) Anmeldenummer : **89102534.8**

(22) Anmeldetag : **15.02.89**

(51) Int. Cl.⁵ : **F24D 19/10**

(54) **Verfahren zur Regelung der den Verbrauchern in einem Heizungssystem zugeführten Wärmemenge und Regler.**

(30) Priorität : **20.07.88 CH 2783/88**

(43) Veröffentlichungstag der Anmeldung :
**31.01.90 Patentblatt 90/05**

(45) Bekanntmachung des Hinweises auf die
Patenterteilung :
**29.04.92 Patentblatt 92/18**

(84) Benannte Vertragsstaaten :
**AT CH DE FR LI NL**

(56) Entgegenhaltungen :
**EP-A- 0 308 848**
**WO-A-83/03461**
**DE-A- 3 713 366**
**NL-A- 7 606 372**

(73) Patentinhaber : **Landis & Gyr Betriebs AG**
**CH-6301 Zug (CH)**

(72) Erfinder : **Lienert, Eduard**
**Küntwilerstrasse 65**
**CH-6343 Rotkreuz (CH)**

(74) Vertreter : **Müller, Hans-Jürgen et al**
**Patentanwälte, Dipl.-Ing. Hans-Jürgen Müller,**
**Dipl.-Chem.Dr. Gerhard Schupfner, Dipl.-Ing.**
**Hans-Peter Gauger, Postfach 101161**
**W-8000 München 1 (DE)**

**Beschreibung**

Die Erfindung bezieht sich auf ein Verfahren zur Regelung in einem Heizungssystem sowie auf einen Regler für eine Heizungsanlage gemäß den Oberbegriffen der Patentansprüche 1,2 und 3.

Aus der DE-A-37 13 366 ist ein Steuerverfahren für eine Heizungsanlage ohne Mischer bekannt, bei dem die Umwälzpumpe nach der Brauchwasser-Aufbereitung zyklisch ein- und ausgeschaltet wird.

Aus der DE-A-2 750 098 ist eine andere Heizungsanlage bekannt, bei der ein Heizkessel ohne Zwischenschaltung eines Mischventils auf einen Heizungskreislauf wirkt. Der Heizkessel wird bei konstanter Temperatur betrieben. Um Überheizen der Räume bei kleinerem Wärmebedarf zu verhindern, sind an den einzelnen Heizkörpern Thermostatventile angebaut, die bei genügend hoher Raumtemperatur den weiteren Durchfluß des Heizmediums durch die Heizkörper verhindern. Um zu vermeiden, daß im Falle des Schließens aller Thermostatventile durch die Heizkreispumpe ein großer Druck aufgebaut wird, wird ein Überströmventil verwendet. Mit dieser Einrichtung wird bei konstant hohem Wärmeangebot des Wärmeerzeugers der niedrigere Wärmebedarf der Verbraucher so gedeckt, daß ein Überheizen der Räume weitgehend vermieden wird.

Aus "Schrowang": Heizungsregelung bei Einfamilien- und kleineren Mehrfamilienhäusern", Krammer-Verlag, Düsseldorf, sind außerdem Heizungsanlagen bekannt, bei denen die Vorlauftemperatur witterungsabhängig gesteuert wird. Hier wird ein Mischventil verwendet, um aus dem heißen Kesselwasser und dem abgekühlten Rücklaufwasser Wasser mit einer dem witterungsabhängigen Wärmebedarf entsprechenden Temperatur zu gewinnen, das der Heizungs-Vorlaufleitung eingespeist wird. Die Anpassung des konstant hohen Wärmeangebots des Wärmeerzeugers an den niedrigeren tatsächlichen Wärmebedarf der Verbraucher erfolgt also durch das Mischventil.

Bekannt sind ferner Heizungsanlagen, bei denen kein Mischventil verwendet wird, sondern der Kessel witterungsabhängig gleitend geregelt wird. Bei manchen Kesselbauarten ist es aber erforderlich, eine Mindest-Kesseltemperatur einzuhalten, weil bei tieferen Kesseltemperaturen Korrosionsgefahr bestünde. Damit liegt bei milden Außentemperaturen ein Wärmeangebot durch den Heizkessel vor, das den gleichzeitig vorhandenen Wärmebedarf der Verbraucher übersteigt. Dieses Überangebot wird vielfach hingenommen, weil eine Lösung entsprechend DE-A-2 750 098 hohe zusätzliche Anlagekosten verursacht

Ferner ist eine Heizungsanlage mit Mischventil bekannt, bei der die Heizkreispumpe immer dann abgeschaltet wird, wenn die Vorlauf-Solltemperatur tiefer liegt als die Solltemperatur für den zu beheizenden Raum, wenn also ein Heizen gar nicht erforderlich ist.

Der Erfindung liegt die Aufgabe zugrunde, in einer Heizungsanlage, deren Wärmeerzeuger ein bestimmtes Wärmeangebot liefert, die Wärmeabgabe an die Verbraucher oder an einen Teil der Verbraucher so zu drosseln, daß bei einem Wärmebedarf der Gesamtheit oder eines Teils der Verbraucher, der unter dem Wärmeangebot des Wärmeerzeugers liegt, ein Überheizen der Räume vermieden und damit gleichzeitig Energie gespart wird.

Die genannte Aufgabe wird erfindungsgemäß durch die Merkmale der Ansprüche 1 bis 3 gelöst.

Nachfolgend werden Ausführungsbeispiele der Erfindung anhand der Zeichnung näher erläutert.

Es zeigen:

Fig. 1 ein Schema einer Heizungsanlage,

Fig. 2 eine Heizkurve und

Fig. 3 ein Schema einer Heizungsanlage mit zwei Verbrauchergruppen.

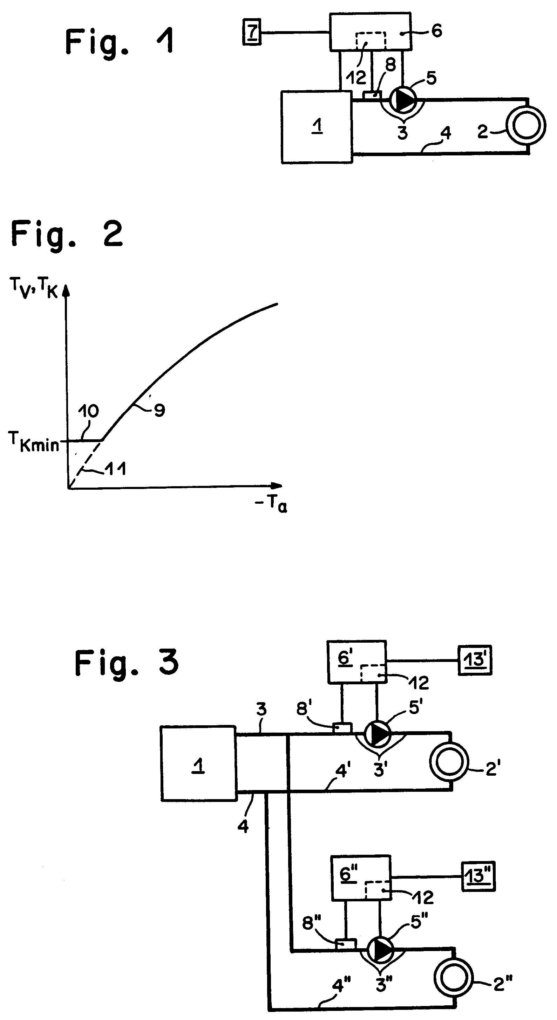

In der Fig. 1 ist eine Heizungsanlage schematisch dargestellt, die einen Heizkessel 1 und eine Verbrauchergruppe 2 umfaßt, wobei der Heizkessel 1 und die Verbrauchergruppe 2 einerseits durch eine Vorlaufleitung 3 und andererseits durch eine Rücklaufleitung 4 miteinander verbunden sind. Im Zuge der Vorlaufleitung 3 ist eine Heizkreispumpe 5 eingebaut, die das Wärmeträgermedium fördert. Die Verbrauchergruppe 2 besteht aus mindestens einem Heizkörper, umfaßt aber üblicherweise mehrere Heizkörper. Die Heizkreispumpe 5 kann statt in der Vorlaufleitung 3 auch in der Rücklaufleitung 4 eingebaut sein. Heizkessel 1 und Heizkreispumpe 5 werden angesteuert von einem Regler 6, der mit einem Außentemperaturfühler 7 und einem Vorlauftemperaturfühler 8 verbunden ist.

Der Regler 6 ermittelt aus der mit dem Außentemperaturfühler 7 gemessen Außentemperatur $T_a$ einen Sollwert für die Vorlauftemperatur $T_v$ gemäß einer in der Fig. 2 dargestellten Heizkurve. Auf der Abszisse ist die Außentemperatur $-T_a$ aufgetragen, wobei das Minuszeichen ausdrücken soll, daß die aufgetragenen Werte von links nach rechts fallen. Auf der Ordinate ist der Sollwert der Kesseltemperatur $T_K$ aufgetragen. Die Heizkurve besteht aus zwei Ästen, nämlich einem ersten Heizkurvenast 9, bei dem eine Abhängigkeit des Sollwertes der Kesseltemperatur $T_K$ von der Außentemperatur $T_a$ besteht, und einem zweiten Heizkurvenast 10, bei dem der Sollwert der Kesseltemperatur $T_K$ nicht von der Außentemperatur $T_a$ abhängt, sondern konstant ist. Dieser zweite Heizkurvenast 10 ist erforderlich, um die Kesseltemperatur $T_K$ auf einem Mindestwert $T_{Kmin}$ zu halten. Dieser Mindestwert $T_{Kmin}$ basiert auf der Tatsache, daß bei bestimmten Kesselbauarten eine Mindesttemperatur eingehalten werden muß, um den Heizkessel 1 vor Korrosion zu schützen. Gestrichelt gezeichnet und mit 11 bezeichnet ist die Fortsetzung des Heizkurvenastes 9 zu höheren Außentemperaturen, nach der eigentlich geheizt werden sollte.

Der Sollwert der Vorlauftemperatur $T_V$ entspricht, da kein Mischventil vorgesehen ist, dem Sollwert der Kesseltemperatur $T_K$. Dies gilt aber nur im Bereich des Heizkurvenastes 9. In jenem Außentemperaturbereich, in dem der Heizkurvenast 10 wirksam ist, besteht ein Überangebot an Heizwärme. Die sich ergebende Vorlauftemperatur $T_V$ ist zu hoch. Vielfach wird dieses Überangebot einfach hingenommen und die Räume werden überheizt. Dies ist nicht nur für die Bewohner unangenehm, sondern bedeutet auch eine Energieverschwendung. Um dies zu vermeiden, wird zur Deckung des kleineren Wärmebedarfs der Verbrauchergruppe 2 die Förderleistung der Heizkreispumpe 5 nach Maßgabe des Verhältnisses von Wärmebedarf und Wärmeangebot reduziert. Dadurch wird zur Verbrauchergruppe 2 in der Zeiteinheit weniger Heizungswasser transportiert, so daß sich auch die Wärmeabgabe der Verbrauchergruppe 2 entsprechend reduziert.

Nach der Erfindung wird.

Der Regler 6 (Fig. 1) enthält deshalb ein Rechen- und Steuerglied 12, mit dem die Heizkreispumpe 5 ein- und ausgeschaltet wird. Die Heizkreispumpe soll dann dauernd laufen, wenn der Sollwert der Vorlauftemperatur größer ist als der Minimalwert der Kesseltemperatur $T_{Kmin}$. In diesem Fall erfolgt keine Reduktion der Förderleistung der Heizkreispumpe 5. Ist hingegen der Sollwert der Vorlauftemperatur kleiner als der Minimalwert der Kesseltemperatur $T_{Kmin}$, wird durch das Rechen- und Steuerglied 12 des Reglers 6 die Heizkreispumpe 5 ein- und ausgeschaltet.

Das Verhältnis von Einschalt- zu Zykluszeit der Heizkreispumpe 5 ist so zu wählen, daß es dem Verhältnis von Wärmebedarf und Wärmeangebot entspricht. Je größer der Wärmebedarf im Verhältnis zum Wärmeangebot, desto größer die Einschaltzeit im Verhältnis zur Zykluszeit, wobei unter Zykluszeit die Summe von Einschalt- und Ausschaltzeit zu verstehen ist, also die Dauer einer EIN-AUS-Sequenz. Damit läßt sich erreichen, daß die durch die Heizkreispumpe 5 zur Verbrauchergruppe 2 transportierte Wärmemenge recht genau dem tatsächlichen Wärmebedarf entspricht.

Als Maß für den Wärmebedarf wird zweckmäßigerweise jene Vorlauf-Solltemperatur gewählt, die sich bei witterungsabhängiger Vorlauftemperaturregelung entsprechend der Verlängerung 11 des Heizkurvenastes 9 ergibt. Als Maß für das Wärmeangebot ist die Kesseltemperatur $T_K$ in Form des Mindestwertes $T_{Kmin}$ zu verwenden.

Nach der Erfindung wird eine genaue Regelung entsprechend dem tatsächlichen Wärmebedarf erreicht, wenn das Verhältnis von Einschalt- zu Zykluszeit der Heizkreispumpe 5 proportional ist dem Verhältnis

$$\frac{\text{Vorlauf–Solltemperatur} - 20}{\text{Kesseltemperatur} \, T_{Kmin} - 20} \, .$$

Damit ist das Verhältnis von Einschalt- zu Zykluszeit der Heizkreispumpe 5 bei einer der Kesseltemperatur $T_{Kmin}$ entsprechenden Vorlauf-Solltemperatur gleich Eins, was bedeutet, daß die Heizkreispumpe 5 dauernd läuft, und bei einer aufgrund des Wärmebedarfs erforderlichen Vorlauf-Solltemperatur von 20°C gleich Null, was bedeutet, daß die Heizkreispumpe 5 dauernd ausgeschaltet ist.

Die Zykluszeit wird nach folgenden Randbedingungen bemessen: eine sehr große Zykluszeit, beispielsweise 30 Minuten, führt dazu, daß ' starke Schwankungen der Raumtemperatur auftreten. Eine sehr kleine Zykluszeit, beispielsweise wenige Sekunden, kann dies zwar vermeiden, birgt aber den Nachteil in sich, daß die Heizkreispumpe 5 stark belastet wird und deshalb starkem Verschleiß unterworfen ist. Unter Beachtung dieser Grenzen hat es sich als vorteilhaft erwiesen, eine Zykluszeit zwischen 5 und 15 Minuten vorzusehen, weil damit die Schwankungen der Raumtemperatur gering gehalten werden können und die Heizkreispumpe 5 nicht übermäßig belastet wird.

Bei einer Heizungsanlage mit zwei oder mehr Verbraucherkreisen gemäß der Fig. 3 kann das gleiche und ein ähnlich gelagertes Problem auftreten, dessen Lösung mit den gleichen Mitteln möglich ist. Eine solche Heizungsanlage besteht aus einem Heizkessel 1, an den eine Vorlaufleitung 3 und eine Rücklaufleitung 4 angeschlossen ist. Die Vorlaufleitung 3 verzweigt in zwei Vorlaufstränge 3' und 3″, während die Rücklaufleitung 4 in zwei Rücklaufstränge 4' und 4″ verzweigt. Zwischen Vorlaufleitung 3' und Rücklaufleitung 4' befindet sich eine Verbrauchergruppe 2' und in die Vorlaufleitung 3' oder in die Rücklaufleitung 4' ist eine erste Heizkreispumpe 5' eingebaut. Durch diese Anlageteile wird die erste Heizgruppe gebildet. Analog besteht eine zweite Heizgruppe aus einer Verbrauchergruppe 2″, einer Vorlaufleitung 3″, einer Rücklaufleitung 4″ und einer Heizkreispumpe 5″.

Bei einer solchen Heizungsanlage mit mehreren Verbraucherkreisen ist eine reine Witterungsführung meist unzweckmäßig. Meist wird deshalb in für den jeweiligen Verbaucherkreis typischen Räumen, den sogenannten Testräumen, je ein Raumtemperaturfühler installiert. Die Raumtemperaturfühler sind in der Fig. 3 mit 13' bzw. 13″ bezeichnet. Sie sind mit dem jeweils zugehörigen Regler 6' bzw. 6″ verbunden. Es ist jedoch auch möglich, den Reglern 6' und 6″ einen weiteren witterungsgeführten Regler überzuordnen, der den Heizkessel 1 steuert. Auch ist es möglich, die Funktionen aller dieser Regler in einem einzigen Regler zu vereinigen.

Zwei oder mehr Verbrauchergruppen werden immer dann vorgesehen, wenn in einem zu beheizenden Gebäude zwei oder mehr Gruppen von Räumen mit unterschiedlichem Wärmebedarf vorhanden sind. Mit dem Begriff Wärmebedarf ist dabei nicht der rechnerische Wärmebedarf gemäß den Berechnungen zur Auslegung der Heizkörper gemeint, sondern vielmehr der momentane Wärmebedarf, der sich beispielsweise in der Höhe der benötigten Vorlauftemperatur äußert. Ein solcher unterschiedlicher Wärmebedarf kann zum Beispiel dann auftreten, wenn in einem Mehrfamilienhaus oder Bürogebäude Räume mit südlicher und mit nördlicher Lage vorhanden sind, obwohl dies bei der Bemessung der Heizkörper schon berücksichtigt wurde. Die auf der Nordseite gelegenen Räume haben in der Regel einen größeren Wärmebedarf und die auf der Südseite gelegenen Räume haben je nach tatsächlicher Sonneneinstrahlung unterschiedlichen Wärmebedarf. Wenn für alle Verbraucherkreise ein gemeinsamer Heizungskessel vorhanden ist, dann muß sich das Wärmeangebot durch den Heizkessel nach jener Raumgruppe richten, die den größeren Wärmebedarf hat.

In einem solchen Fall wäre es möglich, ein zusätzliches Mischventil im Heizkreis mit dem geringeren Wärmebedarf vorzusehen. Soll jedoch auf ein solches verzichtet werden, sei es aus ökonomischen oder strömungstechnischen Gründen, besteht wiederum das Problem, ein zu hohes Wärmeangebot für jene Gruppe mit dem niedrigeren Wärmebedarf zu drosseln. Das erfindungsgemäße Verfahren läßt sich auch in einem solchen Fall vorteilhaft anwenden. Es sei angenommen, daß die Heizgruppe mit der Verbrauchergruppe 2″ jene sei, die den niedrigeren Wärmebedarf aufweist. Dann wird vorteilhaft die Förderleistung der Heizkreispumpe 5″ entsprechend dem geringeren Wärmebedarf gedrosselt.

Der Regler 6″ enthält daher ein Rechen- und Steuerglied 12, mit dem die Heizkreispumpe 5 ein- und ausgeschaltet wird. Wenn von der Konzeption der Heizungsanlage her ausgeschlossen ist, daß die Verbrauchergruppe 2′ jene sein kann, die den niedrigeren Wärmebedarf aufweist, so ist im Regler 6′ ein Rechen- und Steuerglied 12 verzichtbar, sofern der Sollwert der Vorlauftemperatur für diese Verbrauchergruppe aufgrund des höheren Wärmebedarfs nie unter den Minimalwert der Kesseltemperatur $T_{Kmin}$ fallen kann. Andernfalls muß ein solches aber auch im Regler 6′ vorhanden sein.

Der erwähnte Unterschied im Wärmebedarf zweier Verbrauchergruppen 2′ bzw. 2″ ist nicht an einen Minimalwert der Kesseltemperatur $T_{Kmin}$ gebunden. Er kann bei allen Kesseltemperaturen $T_K$ auftreten. Deshalb berechnet das Rechen- und Steuerglied 12 in diesem Fall das Verhältnis von Einschalt- zu Zykluszeit für die Heizkreispumpe 5′ bzw. 5″ nach der Beziehung

$$\frac{\text{Vorlauf–Solltemperatur} - 20}{\text{Kesseltemperatur}\, T_K - 20}.$$

Diese Berechnung erfolgt dann, wenn die Vorlauf-Solltemperatur kleiner ist als die Kesseltemperatur $T_K$.

Das erfindungsgemäße Verfahren läßt sich bei unterschiedlich aufgebauten Heizungsanlagen anwenden. So wird es vorteilhaft zum Beispiel dann angewendet, wenn in einer Heizungsanlage Verbrauchergruppen 2 mit unterschiedlichen Heizkörpertypen vorhanden sind, beispielsweise mit Radiatoren und Fußbodenheizung. Dabei wird die Heizkreispumpe 5 für die Verbrauchergruppe 2 mit Fußbodenheizschlangen gemäß der dafür erforderlichen niedrigeren Vorlauftemperatur zyklisch ein- und ausgeschaltet.

Das zyklische Ein- und Ausschalten der Heizkreispumpe 5 der Verbrauchergruppe 2 mit dem niedrigeren Wärmebedarf ist beispielsweise auch dann vorteilhaft, wenn für die eine Verbrauchergruppe 2 gerade eine Schnellaufheizung nach einer Nachtabsenkphase stattfindet und deshalb der Heizkessel 1 auf eine hohe Betriebstemperatur aufgeheizt wird, während in der Verbrauchergruppe 2 mit dem momentan niedrigeren Wärmebedarf noch reduziert geheizt wird.


## Patentansprüche

1. Verfahren zur Regelung der mindestens einer Verbrauchergruppe (2; 2′; 2″) in einem Heizungssystem zugeführten Wärmemenge, wobei vom Wärmeerzeuger (1) eine größere Wärmeleistung erbracht wird als zur Deckung des Wärmebedarfs einer Verbrauchergruppe (2; 2′; 2″) erforderlich ist, daß die Förderleistung der Heizkreispumpe (5; 5′; 5″) zur Deckung des kleineren Wärmebedarfs der Verbrauchergruppe (2; 2′; 2″) nach Maßgabe des Verhältnisses von Wärmebedarf und Wärmeangebot dadurch reduziert wird, daß die Heizkreispumpe (5; 5′; 5″) periodisch ein- und ausgeschaltet wird, dadurch gekennzeichnet, daß das Verhältnis von Einschalt- zu Zykluszeit der Heizkreispumpe (5; 5′; 5″) proportional ist dem Verhältnis

$$\frac{\text{Vorlauf–Solltemperatur} - 20}{\text{Kesseltemperatur}\, T_{Kmin} - 20},$$

wobei $T_{Kmin}$ die aus Korrosionsschutzgründen einzuhaltende Mindesttemperatur des Heizkessel (1) bedeutet.

2. Regler (6) für eine witterungsabhängig geregelte Heizungsanlage mit einem Heizkessel (1), einer über eine Vorlaufleitung (3) und eine Rücklaufleitung (4) daran angeschlossenen Verbrauchergruppe (2) und einer in der Vorlaufleitung (3) oder in der Rückaufleitung (4) eingebauten Heizkreispumpe (5), wobei der Heizkessel (1) mit einem Mindestwert $T_{Kmin}$ der Kesseltemperatur betrieben wird, wobei der Regler (6) Mittel aufweist, um aus der mittels eines Außentemperaturfühlers (7) gemessenen Außentemperatur einen Sollwert für die Vorlauftemperatur gemäß einer gespeicherten Heizkurve zu berechnen, und wobei der Regler (6) einen Ausgang zur Steuerung der Heizkreispumpe (5) aufweist, dadurch gekennzeichnet, daß der Regler (6) ein Rechen- und Steuerglied (12) enthält, in dem der Sollwert der Vorlauftemperatur mit dem Minimalwert der Kesseltemperatur $T_{Kmin}$ verglichen wird und das Verhältnis von Einschalt- zu Zykluszeit für die Heizkreispumpe (5) in Abhängigkeit vom Sollwert der Vorlauftemperatur und von der Kesseltemperatur $T_{Kmin}$ nach der Beziehung

$$\frac{\text{Vorlauf–Solltemperatur}- 20}{\text{Kesseltemperatur}\,T_{Kmin} - 20}$$

immer dann berechnet wird, wenn der Sollwert der Vorlauftemperatur kleiner ist als der Minimalwert der Kesseltemperatur $T_{Kmin}$, und daß das Rechen- und Steuerglied (12) des Reglers (6) die Heizkreispumpe (5) entsprechend dem berechneten Wert ein- und ausschaltet.

3. Regler (6′, 6″) für eine Heizungsanlage mit einem Heizkessel (1), mit mindestens zwei Verbrauchergruppen (2′, 2″), deren Vorlaufleitungen (3′, 3″) und Rücklaufleitungen (4′, 4″) an gemeinsame Vorlaufleitung (3) bzw. eine gemeinsame Rücklaufleitung (4) angeschlossen sind, mit jeder Verbrauchergruppe (2′, 2″) zugeordneter Heizkreispumpe (5′, 5″), wobei der Regler (6′, 6″) einen Ausgang zur Steuerung der Heizkreispumpe (5′; 5″) aufweist, dadurch gekennzeichnet, daß der Regler (6) ein Rechen- und Steuerglied (12) enthält, in dem der Sollwert der Vorlauftemperatur mit dem Istwert der Kesseltemperatur $T_K$ verglichen wird und das Verhältnis von Einschalt- zu Zykluszeit für die Heizkreispumpe (5′; 5″) in Abhängigkeit vom Sollwert der Vorlauftemperatur und vom Istwert der Kesseltemperatur $T_K$ nach der Beziehung

$$\frac{\text{Vorlauf–Solltemperatur}- 20}{\text{Kesseltemperatur}\,T_K - 20}$$

immer dann berechnet wird, wenn der Sollwert der Vorlauftemperatur kleiner ist als der Istwert der Kesseltemperatur $T_K$, und daß das Rechen- und Steuerglied (12) des Reglers (6′; 6″) die Heizkreispumpe (5′; 5″) entsprechend dem berechneten Wert ein- und ausschaltet.

## Claims

1. A method of regulating the amount of heat supplied to at least one consumer group (2; 2′; 2″) in a heating system, wherein the heat producer (1) provides a greater heat output than is required to cover the heat requirement of a consumer group (2; 2′; 2″), and the delivery of the heating circuit pump (5; 5′; 5″) is reduced to cover the lower heat requirement of the consumer group (2; 2′; 2″) in accordance with the ratio of the heat requirement and the heat supply, by the heating circuit pump (5; 5′; 5″) being periodically switched on and off, characterised in that the ratio of switch-on to cycle time of the heating circuit pump (5; 5′; 5″) is proportional to the ratio:

$$\frac{\text{Flow reference temperature}- 20}{\text{Boiler temperatur}\,T_{Kmin} - 20}$$

wherein $T_{Kmin}$ represents the minimum temperature of the heating boiler (1), which is to be maintained for anti-corrosion reasons.

2. A regulator (6) for a heating installation which is regulated in dependence on weather, having a heating boiler (1), a consumer group (2) connected thereto by way of a flow line (3) and a return line (4), and a heating circuit pump (5) which is installed in the flow line (3) or in the return line (4), wherein the heating boiler (1) is operated with a minimum value $T_{Kmin}$ of the boiler temperature, wherein the regulator (6) has means for calculating from the external temperature which is measured by means of an external temperature sensor (7) a reference value in respect of the flow temperature, in accordance with a stored heating curve, and wherein the regulator (6) has an output for controlling the heating circuit pump (5), characterised in that the regulator (6) includes a calculation and control member (12) in which the reference value in respect of the flow temperature is compared to the minimum value of the boiler temperature $T_{Kmin}$ and the ratio of switch-on to cycle time for the heating circuit pump (5) is calculated in dependence on the reference value in respect of the flow temperature and the boiler temperature $T_{Kmin}$ in accordance with the relationship:

$$\frac{\text{Flow reference temperature}- 20}{\text{Boiler temperature}\,T_{Kmin} - 20}$$

whenever the reference value in respect of the flow temperature is smaller than the minimum value of the boiler temperature $T_{Kmin}$ and that the calculation and control member (12) of the regulator (6) switches the heating circuit pump (5) on and off in accordance with the calculated value.

3. A regulator (6′, 6″) for a heating installation having a heating boiler (1), at least two consumer groups (2′, 2″), the flow lines (3′, 3″) and return lines (4′, 4″) of which are connected to a comon flow line (3) and a common return line (4) respectively, and a heating circuit pump (5′, 5″) associated with each consumer group (2′, 2″), wherein the regulator (6′, 6″) has an output for controlling the heating circuit pump (5′; 5″), characterised in that the regulator (6) includes a calculation and control member (12) in which the reference value in respect of the flow temperature is compared to the actual value of the boiler temprrature $T_K$ and the ratio of switch-on to cycle time for the heating circuit pump (5′; 5″) is calculated in dependence on the reference value in respect of the flow temperature and the actual value of the boiler temperature $T_K$ in accordance with the relationship:

$$\frac{\text{Flow reference temperature} - 20}{\text{Boiler temperature } T_K - 20}$$

Whenever the reference value in respect of the flow tempeature is smaller than the actual value of the boiler temperature $T_K$, and that the calculation and control member (12) of the regulator (6′; 6″) switches the heating circuit pump (5′; 5″) on and off in accordance with the calculated value.

## Revendications

1. Procédé de régulation de la quantité de chaleur fournie au moins à un groupe d'appareils consommateurs (2 ; 2′ ; 2″) dans un système de chauffage, le générateur de chaleur (1) devant avoir une plus capacité de chauffage supérieure à celle nécessaire pour couvrir le besoin de chaleur d'un groupe d'appareils consommateurs (2 ; 2′ ; 2″), procédé dans lequel le débit de la pompe de circulation (5 ; 5′ ; 5″) est réduit, pour couvrir le plus petit besoin de chaleur du groupe d'appareils consommateurs (2 ; 2′ ; 2″), après la détermination du rapport entre le besoin de chaleur et la fourniture de chaleur, par le fait que la pompe de circulation (5 ; 5′ ; 5″) est enclenchée et arrêtée périodiquement, procédé caractérisé en ce que le rapport entre la durée de fonctionnement et la durée de cycle de la pompe de circulation (5 ; 5′ ; 5″) est proportionnelle au rapport :

$$\frac{\text{Valeur de consigne de température d'alimentation} - 20}{\text{Température de chaudière } T_{Kmin} - 20}$$

où $T_{Kmin}$ désigne la température minimale de la chaudière de chauffage 1 à maintenir pour des raisons de protectio contre la corrosion.

2. Régulateur (6) pour une installation de chauffage réglée en fonction des conditions atmosphériques et comportant une chaudière de chauffage (1), un groupe d'appareils consommateurs (2) relié à la chaudière par l'intermédiaire d'un conduit d'alimentation (3) et d'un conduit de retour (4), et une pompe de circulation (5) installée dans le conduit d'alimentation (3) ou dans le conduit de retour (4), la chaudière de chauffage (1) opérant avec une valeur minimale ($T_{Kmin}$) de la température de chaudière, le régulateur (6) comportant des moyens pour calculer, a partir de la température extérieure mesurée à l'aide d'un capteur (7) de température extérieure, une valeur de consigne pour la température d'alimentation conformément à une courbe de chauffage mémorisée, et le régulateur (6) comportant une sortie pour la commande de la pompe de circulation (5), ce régulateur (6) étant caractérisé en ce qu'il comporte un organe de calcul et de commande (12) dans lequel la valeur de consigne de la température d'alimentation est comparée avec la valeur minimale de la température de chaudière $T_{Kmin}$ et le rapport entre la durée de fonctionnement et la durée de cycle de la pompe de circulation (5) est toujours calculé en fonction de la valeur de consigne de la température d'alimentation et de la température de chaudière ($T_{Kmin}$) d'après la relation:

$$\frac{\text{Valeur de consigne de la température d'alimentation} - 20}{\text{Température de chaudière } T_{Kmin} - 20}$$

lorsque la valeur de consigne de la température d'alimentation est plus petite que la valeur minimale de la température de chaudière $T_{Kmin}$, et en ce que l'organe de calcul et de commande (12) du régulateur (6) enclenche et arrête la pompe de circulation (5) en correspondance à la valeur calculée.

3. Régulateur (6′, 6″) pour une installation de chauffage comportant une chaudière de chauffage (1), au moins deux groupes d'appareils consommateurs (2′, 2″) dont les conduits d'alimentation (3′, 3″) et les conduits de retour (4′, 4″) sont reliés à un conduit d'alimentation commun (3) ou à un conduit de retour commun (4), une pompe de circulation (5′, 5″) associée à chaque groupe d'appareils consommateurs (2′, 2″), le régulateur (6′, 6″) comportant une sortie pour la commande de la pompe de circulation (5′, 5″), le régulateur (6) étant caractérisé en ce qu'il comporte un organe de calcul et de commande (12), dans lequel la valeur de consigne de la température d'alimentation est comparée à la valeur réelle de la température de chaudière $T_K$ et le rapport entre la durée de fonctionnement et la durée de cycle de la pompe de circulation (5′ ; 5″) est toujours calculé en fonction de la valeur de consigne de la température d'alimentation et de la valeur réelle de la température de chaudière $T_K$, d'après la relation :

Valeur de consigne de la température d'alimentation−20
Température de chaudière $T_K$ − 20

lorsque la valeur de consigne de la température d'alimentation est plus petite que la valeur réelle de la température de chaudière $T_K$, et en' ce que l'organe de calcul et de commande (12) du régulateur (6′ ; 6″) enclenche et arrête la pompe de circulation (5′ ; 5″) en correspondance à la valeur calculée.

# Fig. 1

# Fig. 2

# Fig. 3